(19) Europäisches Patentamt / European Patent Office / Office européen des brevets

(11) **EP 2 666 890 B1**

## (12) EUROPEAN PATENT SPECIFICATION

(45) Date of publication and mention of the grant of the patent:
**02.09.2020 Bulletin 2020/36**

(21) Application number: **12736268.9**

(22) Date of filing: **06.01.2012**

(51) Int Cl.:
*C25D 1/08* *(2006.01)*    *B22F 3/11* *(2006.01)*
*H01M 8/02* *(2016.01)*    *H01M 4/80* *(2006.01)*
*H01M 4/66* *(2006.01)*    *C25D 7/00* *(2006.01)*
*C25D 5/54* *(2006.01)*    *C22F 1/10* *(2006.01)*
*C22F 1/02* *(2006.01)*    *C22F 1/00* *(2006.01)*
*C22C 1/08* *(2006.01)*    *C25D 5/14* *(2006.01)*
*C25D 5/50* *(2006.01)*    *C23C 18/16* *(2006.01)*
*H01M 8/24* *(2016.01)*    *H01M 8/0232* *(2016.01)*

(86) International application number:
**PCT/JP2012/050182**

(87) International publication number:
**WO 2012/098941 (26.07.2012 Gazette 2012/30)**

(54) **POROUS METAL HAVING HIGH CORROSION RESISTANCE AND PROCESS FOR PRODUCING SAME**

PORÖSES METALL MIT HOHER KORROSIONSBESTÄNDIGKEIT UND VERFAHREN ZU SEINER HERSTELLUNG

MÉTAL POREUX AYANT UNE RÉSISTANCE ÉLEVÉE À LA CORROSION ET PROCÉDÉ POUR PRODUIRE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2011 JP 2011006878**

(43) Date of publication of application:
**27.11.2013 Bulletin 2013/48**

(73) Proprietor: **Sumitomo Electric Toyama Co., Ltd.**
**Imizu-shi**
**Toyama 934-0031 (JP)**

(72) Inventors:
• **NISHIMURA, Junichi**
**Imizu-shi**
**Toyama 934-0031 (JP)**

• **TSUCHIDA, Hitoshi**
**Imizu-shi**
**Toyama 934-0031 (JP)**
• **SAITO, Hidetoshi**
**Imizu-shi**
**Toyama 934-0031 (JP)**

(74) Representative: **Hoffmann Eitle**
**Patent- und Rechtsanwälte PartmbB**
**Arabellastraße 30**
**81925 München (DE)**

(56) References cited:
WO-A2-2010/041014    CN-A- 1 552 949
CN-A- 101 509 085    JP-A- 57 174 484
JP-A- 2000 355 789    US-A1- 2001 031 375

**Description**

Technical Field

The present invention relates to a porous metallic body with high corrosion resistance, the porous metallic body being usable as collectors of secondary batteries, such as lithium-ion batteries, capacitors, and fuel cells, various filters, catalyst supports, and so forth, and to a method for producing the porous metallic body.

Background Art

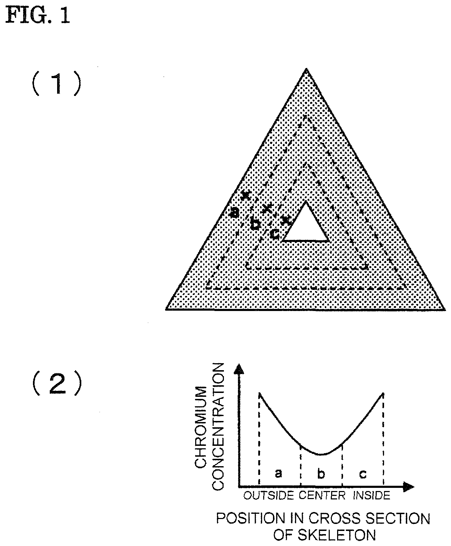

Examples of highly corrosion-resistant porous metallic bodies include porous Ni-Cr alloy bodies specifically described in PTLs 1 2 and 3. That is, for example, a porous Ni-Cr alloy body has been known, the porous Ni-Cr alloy body being produced by a cementation process in which a porous nickel body formed by a plating method, the porous nickel body having a conductive three-dimensional network resin serving as a support, is embedded in Cr and $NH_4Cl$ powders and subjected to heat treatment in an Ar or $H_2$ gas atmosphere. However, as illustrated in Figure 1, the porous Ni-Cr alloy body formed by the cementation process exhibits large variations in chromium concentration in a cross section of its skeleton. In other words, when the cross section of the skeleton is divided in the thickness direction into three portions, i.e., the outside, center, and inside, the chromium concentration in the center tends to be lower than those in the outside and the inside. As a result, in the case where the porous body is processed into a desired shape, the porous body disadvantageously has a cross section with low corrosion resistance.

The variations in chromium concentration in the cross section of the skeleton are caused by the diffusion of Cr from a surface layer of the skeleton of the porous nickel body to the inside at a pressure of the Ar or $H_2$ gas atmosphere and a temperature while the porous nickel body is embedded in a larger amount of the Cr powder than a predetermined amount of Cr to be diffused into the porous nickel body. Thus, a remedial measure to excessively diffuse Cr to increase the chromium concentration in the entire cross section of the skeleton is conceived. In this case, a surface layer portion of the skeleton has an extremely high chromium concentration and thus is embrittled and detached.

It is thus desirable to provide a porous metallic body having high corrosion resistance even at its cross section that exhibits variations in chromium concentration, and a method for producing the porous metallic body.

Citation List

Patent Literature

PTL 1: Japanese Unexamined Patent Application Publication No. 08-013129
PTL 2: Japanese Unexamined Patent Application Publication No. 08-232003
PTL 3: PCT publication WO2010/041014.

Summary of Invention

Technical Problem

In light of the foregoing problems, the present invention aims to provide a porous metallic body suitable for collectors of secondary batteries, such as lithium-ion batteries, capacitors, and fuel cells, various filters, catalyst supports, and so forth, the porous metallic body having high corrosion resistance even at its cross section, and a method for producing the porous metallic body.

Solution to Problem

The inventors have conducted intensive studies and have found that in a method for producing a porous Ni-Cr alloy body, it is effective to form a chromium layer on a porous nickel body by plating and then diffuse chromium by heat treatment. This finding has led to the completion of the present invention. That is, the present invention has the following configuration.

(1) A porous metallic body includes a three-dimensional network structure composed of an alloy containing at least Ni and Cr, the porous metallic body having a skeleton formed of a hollow core and a shell, in which when a cross section of the shell is evenly divided in the thickness direction into three portions, i.e., an outer portion, a central portion, and an inner portion, and when concentrations in percent by weight of Cr in the outer portion, the central portion, and the inner portions are defined as symbols a, b, and c, the symbols a, b, and c satisfy the relation given by expression (1):

$$|(a + c)/2 - b|/(a + b + c)/3 < 0.20 \qquad (1)$$

wherein a>b and c>b.

(2) A method for producing the porous metallic body described in item (1) includes:

a step of subjecting a three-dimensional network resin to electrically conductive treatment,
a first plating step of subjecting the three-dimensional network resin to Ni plating,
a first heat-treatment step of removing the three-dimensional network resin,
a second plating step of subjecting a Ni layer to Cr plating, and
a second heat-treatment step of alloying the Ni layer and a Cr layer.

(3) In the method described in item (2) for producing the porous metallic body, the order of the steps after the electrically conductive treatment is the first plating step of performing Ni plating, the first heat-treatment step of removing the three-dimensional network resin, the second plating step of subjecting the Ni layer to Cr plating, and the second heat-treatment step of alloying the Ni layer and the Cr layer,
the first heat-treatment step is a step of performing heat treatment in a stainless-steel muffle under an oxidizing atmosphere at 600°C or higher and 800°C or lower, and
the second heat-treatment step is a step of performing heat treatment in a stainless-steel muffle under a reducing gas atmosphere at 800°C or higher and 1100°C or lower.

Advantageous Effects of Invention

According to the present invention, it is possible to provide a porous metallic body suitable for collectors of secondary batteries, such as lithium-ion batteries, capacitors, and fuel cells, various filters, catalyst supports, and so forth, the porous metallic body having high corrosion resistance even at its cross section, and a method for producing the porous metallic body.

Brief Description of Drawings

[Fig. 1] Figure 1 is a schematic view illustrating the diffusion state of chromium in a conventional porous metallic body.

Description of Embodiments

A porous metallic body according to the present invention has a three-dimensional network structure composed of an alloy containing at least Ni and Cr, the porous metallic body having a skeleton formed of a hollow core portion and a shell, in which when a cross section of the shell is evenly divided in the thickness direction into three portions, i.e., an outer portion, a central portion, and an inner portion, and when concentrations in percent by weight of Cr in the outer portion, the central portion, and the inner portions are defined as symbols a, b, and c, the symbols a, b, and c satisfy the relation given by expression (1):

$$|(a + c)/2 - b|/(a + b + c)/3 < 0.20 \qquad (1).$$

That is, when the values of the relational expression of a, b, and c is less than 0.20, the porous metallic body having high corrosion resistance even at its cross section is provided. The value of the expression is preferably 0.1 or less.

A method for producing the porous metallic body having the three-dimensional network structure according to the present invention includes a step of subjecting a three-dimensional network resin to electrically conductive treatment, a first plating step of subjecting the three-dimensional network resin to Ni plating, a first heat-treatment step of removing the three-dimensional network resin, a second plating step of subjecting a Ni layer to Cr plating, and a second heat-treatment step of alloying the Ni layer and a Cr layer. Thereby, it is possible to successfully produce the three-dimensional-network porous metallic body having the skeleton with the hollow core according to the present invention.

(Porous resin body)

As the three-dimensional network resin, a resin foam, a nonwoven fabric, felt, a woven fabric, or the like is used. These may be used in combination, as needed. While the material of the resin is not particularly limited, a material that can be removed by incineration treatment after the plating of the metal is preferred. In consideration of the handleability of a porous resin body, the porous resin body is preferably composed of a flexible material because when the porous resin body, particularly in the form of a sheet, has high stiffness, the porous resin body is fragile.

In the present invention, a resin foam is preferably used as a three-dimensional network resin. The resin foam will suffice as long as the resin foam is porous. A known or commercially available resin foam may be used. Examples thereof include urethane foams and styrene foams. Among them, a urethane foam is preferred in view of a high porosity. The thickness, the porosity, and the average pore size of the resin foam are not limited and may be appropriately set, depending on the intended use.

(Electrically conductive treatment)

A method for subjecting the three-dimensional network resin to the electrically conductive treatment is not particularly limited as long as an electrically conductive coating layer can be formed on a surface of a porous resin body. Examples of a material to form the electrically conductive coating layer include metals, such as nickel, titanium, and stainless steel, and carbon powders composed of, for example, amorphous carbon, such as carbon black, and graphite. Among them, in particular, a carbon powder is preferred, and carbon black is more preferred. In the case where amorphous carbon or the like other than metals is used, the electrically conductive coating layer is also removed in removal treatment of the porous resin body described below.

With respect to specific preferred examples of the electrically conductive treatment, when nickel is used, electroless plating treatment and sputtering treatment are preferred. When metals, such as titanium and stainless steel, and materials, such as carbon black and graphite, are used, treatment in which a binder is added to a fine powder of such a material and the resulting mixture is applied to a surface of the porous resin body is preferred.

The electroless plating treatment with nickel may be performed by, for example, immersing a porous resin body in a known electroless-nickel-plating bath, such as an aqueous nickel sulfate solution that contains sodium hypophosphite serving as a reducing agent. The porous resin body may be immersed in, for example, an activation solution containing a small amount of palladium ions (a cleaning solution manufactured by Kanigen Co.) before the immersion in the plating bath, as needed.

The sputtering treatment with nickel may be performed by, for example, mounting a porous resin body on a substrate holder and then applying a direct voltage between the holder and a target (nickel) with an inert gas fed, bombarding nickel with inert-gas ions, and depositing the sputtered nickel particles on a surface of the porous resin body.

The electrically conductive coating layer may be continuously formed on the surface of the porous resin body. The weight per area is not limited and may be usually about 0.1 $g/m^2$ or more and about 20 $g/m^2$ or less and preferably about 0.5 $g/m^2$ or more and about 5 $g/m^2$ or less.

(Nickel plating step)

The nickel plating step is not particularly limited as long as a step of performing nickel plating is conducted by a known nickel plating method. An electroplating method is preferably used. When the thickness of the plated film is increased by the foregoing electroless plating treatment and/or the sputtering treatment, there is no need for electroplating treatment. However, the process is not preferred from the viewpoint of productivity and cost. It is thus preferable to employ the foregoing method in which the nickel-plated film is formed by the electroplating method after the step of subjecting the porous resin body to the electrically conductive treatment.

Nickel electroplating treatment may be performed in the usual manner. For example, a known or commercially available plating bath may be used. Examples thereof include Watts baths, chloride baths, and sulfamic acid baths. The porous resin body having the electrically conductive coating layer that has been formed by the electroless plating, sputtering, or the like on the surface is immersed in a plating bath. The porous resin body is connected to a cathode. A nickel counter electrode plate is connected to an anode. Direct current or pulse current is passed therethrough to form an electroplated nickel coating on the electrically conductive coating layer.

The electroplated nickel layer may be formed on the electrically conductive coating layer to the extent that the electrically conductive coating layer is not exposed. The weight per area of the electroplated nickel layer is not limited. The weight per area of the electroplated nickel layer may be usually about 100 $g/m^2$ or more and about 600 $g/m^2$ or less and preferably about 200 $g/m^2$ or more and about 500 $g/m^2$ or less.

(First heat treatment step of removing three-dimensional network resin)

With respect to conditions of the first heat treatment to remove the three-dimensional network resin, the heat treatment is preferably performed in a stainless-steel muffle at 600°C or higher and 800°C or lower in an oxidizing atmosphere, such as air. A heat-treatment temperature of less than 600°C fails to completely remove the three-dimensional network resin. A heat-treatment temperature of more than 800°C makes the layers fragile and greatly reduces the strength, so that the layers are not practically used.

(Chromium plating step)

The chromium plating step is not particularly limited as long as the chromium plating step is a step of performing chromium plating by a known plating method. An electroplating method is preferably employed. When the thickness of the plated film is increased by the sputtering treatment, there is no need for the electroplating treatment. However, the process is not preferred from the viewpoint of productivity and cost.

Chromium electroplating treatment may be performed in the usual manner. For example, a known or commercially available plating bath may be used. Examples thereof include hexavalent-chromium baths and trivalent-chromium baths. The porous nickel body is immersed in a chromium plating bath. The porous nickel body is connected to a cathode. A chromium counter electrode plate is connected to an anode. Direct current or pulse current is passed therethrough to form an electroplated chromium layer on the nickel layer. The weight per area of the electroplated chromium layer is not limited. The weight per area of the electroplated chromium layer may be usually about 10 $g/m^2$ or more and about 600 $g/m^2$ or less and preferably about 50 $g/m^2$ or more and about 300 $g/m^2$ or less.

After subjecting the three-dimensional network resin to the electrically conductive treatment, plating is preferably performed in order of nickel and chromium. If the three-dimensional network resin that has been subjected to the electrically conductive treatment is first subjected to chromium plating, a chromium-plated layer cannot be formed inside the skeleton. The reason for this is that the three-dimensional network resin subjected to only the electrically conductive treatment has a low electrical conductivity of less than 1 S/m and that the throwing power of chromium plating is extremely lower than that of nickel plating. In contrast, the three-dimensional network resin subjected to the electrically conductive treatment and the nickel plating has an electrical conductivity of 1 S/m or more. Then the resin is subjected to chromium plating, so that a chromium-plated layer can be formed even inside the skeleton.

(Second heat-treatment step of alloying nickel layer and chromium layer)

Let us consider when the order of the steps after the electrically conductive treatment is the first plating step of performing Ni plating, the first heat-treatment step of removing the three-dimensional network resin, the second plating step of subjecting the Ni layer to Cr plating, and the second heat-treatment step of alloying the Ni layer and the Cr layer. With respect to conditions of the second heat treatment to alloy the nickel layer and the chromium layer, the heat treatment is preferably performed in a stainless-steel muffle at 800°C or higher and 1100°C or lower in a reducing gas atmosphere, for example, CO or $H_2$. When the heat-treatment temperature is less than 800°C, the reduction of nickel oxidized in the first heat-treatment step and the alloying of the nickel layer and the chromium layer require a prolonged time, leading to a cost disadvantage. When the heat-treatment temperature is more than 1100°C, the body of the heat-treatment furnace is damaged in a short period of time. Accordingly, the heat treatment is preferably performed in the temperature range described above.

Meanwhile, let us consider when the order of the steps after the electrically conductive treatment is the first plating step of performing Ni plating, the second plating step of subjecting a Ni layer to Cr plating, the first heat-treatment step of removing the three-dimensional network resin, and the second heat-treatment step of alloying the Ni layer and a Cr layer. With respect to conditions of the second heat treatment to alloy the nickel layer and the chromium layer, the heat treatment is preferably performed in a carbon muffle at 1000°C or higher and 1500°C or lower in a reducing gas atmosphere, for example, CO or $H_2$, or in an inert gas atmosphere, for example, $N_2$ or Ar. This is because carbon is needed to reduce chromium oxidized in the first heat-treatment step. When the heat-treatment temperature is less than 1000°C, the reduction of nickel and chromium oxidized in the first heat-treatment step and the alloying of the nickel layer and the chromium layer require a prolonged time, leading to a cost disadvantage. When the heat-treatment temperature is more than 1500°C, the body of the heat-treatment furnace is damaged in a short period of time. Accordingly, the heat treatment is preferably performed in the temperature range described above.

By performing the foregoing steps, it is possible to produce a porous Ni-Cr alloy body which exhibits small variations in Cr concentration in a cross section of the skeleton and which has high corrosion resistance even at the cross section. Only a desired amount of Cr diffused is deposited on the porous nickel body, and then the alloying is performed by the heat treatment. This results in the small variations in Cr concentration in the cross section of the skeleton.

EXAMPLES

While the present invention will be described in more detail below on the basis of examples, the three-dimensional network porous metallic body of the present invention is not limited thereto.

[EXAMPLE 1]

(Electrically conductive treatment of three-dimensional network resin)

A 1.5-mm-thick polyurethane sheet was used as a three-dimensional network resin. Then 100 g of carbon black, which is amorphous carbon, having a particle size of 0.01 to 0.2 $\mu$m was dispersed in 0.5 L of a 10% aqueous solution of an acrylate resin, thereby producing an adhesive coating material in this ratio. Electrically conductive treatment was performed by continuously immersing the porous resin sheet in the coating material, squeezing the sheet with rollers, and drying the sheet. Thereby, an electrically conductive coating layer was formed on surfaces of the three-dimensional network resin.

(Nickel plating step)

Then 300 g/m$^2$ of nickel was deposited by electroplating on the three-dimensional network resin subjected to the electrically conductive treatment, thereby forming an electroplated layer. As a plating solution, a nickel sulfamate plating solution was used.

(First heat-treatment step of removing three-dimensional network resin)

To remove the three-dimensional network resin, heat treatment was performed in a stainless-steel muffle at 700°C in an air oxidizing atmosphere to provide a porous nickel body.

(Chromium plating step)

Members in which chromium was deposited on the porous nickel bodies in amounts of 90 g/m$^2$, 150 g/m$^2$, and 230 g/m$^2$ by chromium plating were defined as porous Ni-Cr alloy bodies A-1, A-2, and A-3, respectively.
As a plating solution, a trivalent-chromium plating solution was used.

(Second heat-treatment step of alloying nickel layer and chromium layer)

Subsequently, heat treatment was performed in a stainless-steel muffle at 1000°C under a H$_2$ gas atmosphere. By performing the foregoing steps, the porous Ni-Cr alloy bodies A-1, A-2, and A-3 of the present invention were produced, the porous Ni-Cr alloy bodies having high corrosion resistance even at their cross sections.

[COMPARATIVE EXAMPLE 1]

The porous nickel bodies obtained after the first heat-treatment step of removing the three-dimensional network resin in Example 1 were embedded in Cr and NH$_4$Cl powders and subjected to cementation treatment at 1100°C in an Ar gas atmosphere in such a manner that the porous nickel bodies increased in weight by 90 g/m$^2$, 150 g/m$^2$, and 230 g/m$^2$. The resulting bodies were defined as porous Ni-Cr alloy bodies B-1, B-2, and B-3. By performing the foregoing steps, the porous Ni-Cr alloy bodies B-1, B-2, and B-3 having high corrosion resistance were produced.

<Evaluation>

(Chromium concentration in cross section of skeleton)

The chromium concentration in the shell cross section of the skeleton of each of the resulting porous Ni-Cr alloy bodies having hollow cores was quantitatively analyzed with a scanning electron microscope (SEM)-energy-dispersive X-ray spectroscope (EDX).
Table I describes the results. Table I demonstrates that each of the porous Ni-Cr alloy bodies B-1 to B-3 in Comparative Example 1 exhibited large variations in chromium concentration in the shell cross section of the skeleton, i.e., the chromium concentration in the central portion tends to be lower than those in the outer portion and the inner portion, and that (a + c)/2 - b|/(a + b + c)/3 was 0.20 or more. Furthermore, in B-3, in which the overall Cr concentration is high, the surface layer of the skeleton was detached.

In contrast, it was found that each of the porous Ni-Cr alloy bodies A-1 to A-3 in Example 1 exhibited small variations in chromium concentration in the shell cross section of the skeleton and that |(a + c)/2 - b|/(a + b + c)/3 was less than 0.20. This demonstrates that the porous Ni-Cr alloy body of the present invention has only small variations in chromium concentration in the shell cross section of the skeleton and has excellent corrosion resistance even at the cross section.

[Table I]

|  | Chromium concentration [wt%] | | | $\|(a+c)/2-b\| \div (a+b+c)/3$ | State of surface layer of skeleton |
|  | Outside : a | Center: b | Inside : c |  |  |
|---|---|---|---|---|---|
| A-1 | 25.1 | 22.4 | 22.2 | 0.05 | good |
| A-2 | 38.0 | 30.3 | 29.8 | 0.11 | good |
| A-3 | 48.8 | 39.6 | 42.7 | 0.14 | good |
| B-1* | 25.2 | 18.5 | 24.9 | 0.29 | good |
| B-2* | 40.4 | 19.2 | 39.6 | 0.63 | good |
| B-3* | 55.9 | 19.6 | 56.1 | 0.83 | detached |
| * indicates the comparative example. | | | | | |

(Evaluation of corrosion resistance 1)

To check whether the resulting porous Ni-Cr alloy bodies can be used or not for lithium-ion batteries and capacitors, the corrosion resistance of each of the porous Ni-Cr alloy bodies was evaluated by cyclic voltammetry. With respect to the evaluation size, the thickness was adjusted to 0.4 mm with a roller press. The size was set to a 3 cm × 3 cm square. Pieces with and without a cut surface (3 cm × 3 cm square pieces produced from the three-dimensional network resin) were prepared. Aluminum tabs serving as leads were welded to the pieces. The pieces were stacked with a microporous membrane separator provided therebetween to produce an aluminum laminate cell. A silver/silver chloride electrode was used as a reference electrode. As an electrolytic solution, ethylene carbonate/diethyl carbonate (Ec/DEC, 1:1) containing 1 mol/L of $LiPF_6$ was used.

The measurement potential was in the range of 0 to 5 V with reference to the lithium potential. When the porous Ni-Cr alloy bodies are used for lithium-ion batteries and capacitors, an oxidation current should not flow at a potential of 4.3 V. The potential at which an oxidation current begins to flow was measured at a potential sweep rate of 5 mV/s. Table II describes the results.

As described in Table II, in each of the porous Ni-Cr alloy bodies B-1 to B-3 according to Comparative Example 1, when no cut surface was present, no oxidation current flowed even at a potential of 4.3 V, whereas when a cut surface was present, an oxidation current began to flow before the potential reached 4 V. In contrast, in each of the porous Ni-Cr alloy bodies A-1 to A-3 according to Example 1, no oxidation current flowed even at a potential of 4.3 V, regardless of the presence or absence of the cut surface. This demonstrates that the porous Ni-Cr alloy body according to the present invention can be used for lithium-ion batteries and capacitors, which are required to have high corrosion resistance, regardless of the presence or absence of a cut surface.

[Table II]

|  | Potential at which oxidation current begins to flow [V] | |
|  | No cut surface is present | Cut surface is present |
|---|---|---|
| A-1 | 4.5 | 4.4 |
| A-2 | 4.6 | 4.7 |
| A-3 | 4.8 | 4.7 |
| B-1* | 4.5 | 3.5 |
| B-2* | 4.7 | 3.6 |

(continued)

|  | Potential at which oxidation current begins to flow [V] | |
| --- | --- | --- |
|  | No cut surface is present | Cut surface is present |
| B-3* | 4.8 | 3.9 |
| * indicates the comparative example. | | |

(Evaluation of corrosion resistance 2)

To check whether the resulting porous Ni-Cr alloy bodies can be used or not for various filters and catalyst supports, the bodies were heated in air at 800°C for 12 hours. A change in the weight of each of the porous Ni-Cr alloy bodies was measured. Table III describes the results. As described in Table III, in each of the porous Ni-Cr alloy bodies B-1 to B-3 according to Comparative Example 1, when no cut surface was present, the amount of weight change was less than 1 mg/cm$^2$, whereas when a cut surface was present, the amount of weight change was in the range of 5 to 6 mg/cm$^2$. That is, oxidation proceeded. In contrast, in each of the porous Ni-Cr alloy bodies A-1 to A-3 according to Example 1, the amount of weight change was less than 1 mg/cm$^2$, regardless of the presence or absence of the cut surface. This demonstrates that the porous Ni-Cr alloy body according to the present invention can be used for various filters and catalyst supports, which are required to have high corrosion resistance, regardless of the presence or absence of a cut surface.

[Table III]

|  | Amount of weight change [mg/cm2] | |
| --- | --- | --- |
|  | No cut surface is present | Cut surface is present |
| A-1 | < 1 | < 1 |
| A-2 | < 1 | <1 |
| A-3 | < 1 | <1 |
| B-1* | < 1 | 6 |
| B-2* | < 1 | 5 |
| B-3* | < 1 | 5 |
| * indicates the comparative example. | | |

Industrial Applicability

A porous metallic body according to the present invention is suitably usable as collectors of lithium-ion batteries, capacitors, fuel cells, and so forth because of its excellent corrosion resistance, and is suitably usable as various filters and catalyst supports because of its excellent heat resistance.

**Claims**

**1.** A porous metallic body comprising a three-dimensional network structure composed of an alloy containing at least Ni and Cr, wherein the porous metallic body has a skeleton formed of a hollow core and a shell, and wherein when a cross section of the shell is evenly divided in the thickness direction into three portions, i.e., an outer portion, a central portion, and an inner portion, and when concentrations in percent by weight of Cr in the outer portion, the central portion, and the inner portions are defined as symbols a, b, and c, the symbols a, b, and c satisfy the relation given by expression (1):

$$|(a + c)/2 - b|/((a + b + c)/3) < 0.20 \qquad (1)$$

wherein a>b and c>b.

2. A method for producing the porous metallic body according to claim 1, the method comprising at least:

a step of subjecting a three-dimensional network resin to electrically conductive treatment;
a first plating step of subjecting the three-dimensional network resin to Ni plating;
a first heat-treatment step of removing the three-dimensional network resin;
a second plating step of subjecting a Ni layer to Cr plating; and
a second heat-treatment step of alloying the Ni layer and a Cr layer,
wherein the order of the steps after the electrically conductive treatment is the first plating step of performing Ni plating, the first heat-treatment step of removing the three-dimensional network resin, the second plating step of subjecting the Ni layer to Cr plating, and the second heat-treatment step of alloying the Ni layer and the Cr layer,
wherein the first heat-treatment step is a step of performing heat treatment in a stainless-steel muffle under an oxidizing atmosphere at 600°C or higher and 800°C or lower, and
wherein the second heat-treatment step is a step of performing heat treatment in a stainless-steel muffle under a reducing gas atmosphere at 800°C or higher and 1100°C or lower.

## Patentansprüche

1. Poröser metallischer Körper, enthaltend eine dreidimensionale Netzwerkstruktur, die sich aus einer Legierung zusammensetzt, die zumindest Ni und Cr enthält, worin der poröse metallische Körper ein Gerüst hat, das aus einem hohlen Kern und einer Hülle gebildet ist, und worin dann, wenn ein Querschnitt der Hülle gleichmäßig in der Dickenrichtung in drei Bereiche unterteilt wird, d.h., einen äußeren Bereich, einen mittleren Bereich und einen inneren Bereich, und wenn Konzentrationen als Gewichtsprozent von Cr in dem äußeren Bereich, dem mittleren Bereich und dem inneren Bereich mit den Symbolen a, b und c definiert werden, die Symbole a, b und c die Beziehung gemäß dem Ausdruck (1) erfüllen:

$$|(a + c)/2 - b|/((a + b + c)/3) < 0,20 \qquad (1)$$

worin a>b und c>b.

2. Verfahren zur Erzeugung des porösen metallischen Körpers gemäß Anspruch 1, wobei das Verfahren zumindest enthält:

einen Schritt zum Durchführen einer elektrisch leitenden Behandlung mit einem dreidimensionalen Netzwerkharz,
einen ersten Plattierschritt zum Durchführen einer Ni-Plattierung mit dem dreidimensionalen Netzwerkharz,
einen ersten Wärmebehandlungsschritt zum Entfernen des dreidimensionalen Netzwerkharzes,
einen zweiten Plattierschritt zum Durchführen eines Cr-Plattierens mit einer Ni-Schicht und
einen zweiten Wärmebehandlungsschritt zum Legieren der Ni-Schicht und einer Cr-Schicht,
worin die Reihenfolge der Schritte nach der elektrisch leitenden Behandlung der erste Plattierschritt zum Durchführen der Ni-Plattierung, der erste Wärmebehandlungsschritt zum Entfernen des dreidimensionalen Netzwerkharzes, der zweite Plattierschritt zum Durchführen einer Cr-Plattierung mit der Ni-Schicht und der zweite Wärmebehandlungsschritt zum Legieren der Ni-Schicht und der Cr-Schicht ist,
worin der erste Wärmebehandlungsschritt ein Schritt zum Durchführen einer Wärmebehandlung in einer Edelstahlmuffe unter einer oxidierenden Atmosphäre bei 600°C oder mehr und 800°C oder weniger ist, und
worin der zweite Wärmebehandlungsschritt ein Schritt zum Durchführen einer Wärmebehandlung in einer Edelstahlmuffe unter einer reduzierenden Gasatmosphäre bei 800°C oder mehr und 1.100°C oder weniger ist.

## Revendications

1. Corps métallique poreux comprenant une structure de réseau tridimensionnel composée d'un alliage contenant au moins du Ni et du Cr, dans lequel le corps métallique poreux présente un squelette formé d'un noyau creux et d'une coque, et dans lequel, lorsqu'une section transversale de la coque est uniformément divisée dans le sens de l'épaisseur en trois parties, c'est-à-dire, une partie externe, une partie centrale, et une partie interne, et lorsque des concentrations en pourcentage en poids de Cr dans la partie externe, la partie centrale, et les parties internes sont définies par les symboles a, b et c, les symboles a, b et c satisfont à la relation donnée par l'expression (1) :

$$|(a + c)/2 - b|/((a + b + c)/3) < 0,20 \qquad (1)$$

dans laquelle a > b et c > b.

2. Procédé de production du corps métallique poreux selon la revendication 1, le procédé comprenant au moins :

une étape consistant à soumettre une résine de réseau tridimensionnel à un traitement électroconducteur ;
une première étape de placage consistant à soumettre la résine du réseau tridimensionnel à un placage de Ni ;
une première étape de traitement à chaud consistant à éliminer la résine du réseau tridimensionnel ;
une seconde étape de placage consistant à soumettre une couche de Ni à un placage de Cr ; et
une seconde étape de traitement à chaud consistant à allier la couche de Ni et une couche de Cr,
dans lequel l'ordre des étapes après le traitement électroconducteur est la première étape de placage consistant à effectuer le placage de Ni, la première étape de traitement à chaud consistant à éliminer la résine du réseau tridimensionnel, la seconde étape de placage consistant à soumettre la couche de Ni à un placage de Cr et la seconde étape de traitement à chaud consistant à allier la couche de Ni et la couche de Cr,
dans lequel la première étape de traitement à chaud est une étape consistant à effectuer un traitement à chaud dans une moufle d'acier inoxydable sous atmosphère oxydante à 600 °C ou plus et à 800 °C ou moins, et
dans lequel la seconde étape de traitement à chaud est un étape consistant à effectuer un traitement à chaud dans une moufle d'acier inoxydable sous atmosphère de gaz réducteur à 800 °C ou plus et à 1100 °C ou moins.

FIG. 1

(1)

(2)

CHROMIUM CONCENTRATION

a    b    c

OUTSIDE  CENTER  INSIDE

POSITION IN CROSS SECTION
OF SKELETON

11

**EP 2 666 890 B1**

**Patent documents cited in the description**

- JP 8013129 A
- JP 8232003 A
- WO 2010041014 A